# EUROPEAN PATENT APPLICATION

(11) **EP 4 173 592 A1**
(43) Date of publication of application: **03.05.2023**
(21) Application number: 22203490.2
(22) Date of filing: 25.10.2022
(51) Int. Cl.: A61C 8/00

(54) **DENTAL IMPLANT**

(30) Priority: 28.10.2021 IT 202100027647
(71) Applicant: Poliambulatorio S. Alessandro S.r.l., 25036 Palazzolo sull'Oglio (BS) (IT)
(72) Inventor: BOSISIO, Claudio, I-25036 Palazzolo sull'Oglio, BRESCIA (IT)
(74) Representative: Chimini, Francesco

(57) **Abstract**

A dental prosthesis implant comprises an endosseous implant portion extending along an implant axis (X) and a transgingival portion extending from the implant portion and forming an implant-prosthetic connection platform. The implant-prosthesis connection platform extends perpendicularly with respect to a prosthetic axis (Y), said prosthetic axis (Y) being inclined with respect to the implant axis (X). The transgingival portion forms a side wall with a diameter which is equal to or less than the diameter of the endosseous implant portion and progressively decreasing at least in a distal portion ending with the implant-prosthesis connection platform.

## Description

### Field of the invention

The present invention relates to an endosseous dental implant for anchoring dental prostheses, such as, for example, crowns, artificial teeth, tooth bridges, in the maxillary or mandibular bone.

### Prior art

In the field of dental implants, endosseous dental implants are widespread. These implants are designed to simulate how a natural tooth is fixed to the bone of the maxilla or mandible.

For this purpose, endosseous dental implants usually comprise an endosseous implant portion suitable for anchoring, for example by screwing, to the bone of the maxilla or mandible, and a transgingival portion that is suitable for crossing the gingiva to form a connection interface of the dental prosthesis.

Endosseous dental implants must therefore be realized in such a way as to provide a stable and long-lasting fixing of the dental prosthesis to the bone.

Furthermore, these implants may give rise to inflammation and/or infections caused by the entry and deposit of residues in the connection area between the transgingival portion and the dental prosthesis, or even by the penetration of these residues deeper into the hole of the bone in which the endosseous implant portion is inserted.

### Solution

The object of the present invention is to propose a dental implant which simulates as much as possible the natural fixing of a tooth to the mandibular or maxillary bone, which allows a stable and long-lasting anchoring of dental prostheses, and which, at the same time, allows accumulations of organic material in the connection area between the implant and the prosthesis or at the bone implant site to be avoided.

Another object of the invention is to propose a dental implant which allows the above mentioned objectives to be achieved with a reduced number of components.

These objects are achieved by a dental implant according to claim 1.

Some advantageous embodiments are the object of the dependent claims.

### Figures

Further features and advantages of the dental implant according to the invention will result from the description below of preferred embodiments thereof, provided purely by way of indication and non-limiting examples, with reference to the accompanying figures, wherein:

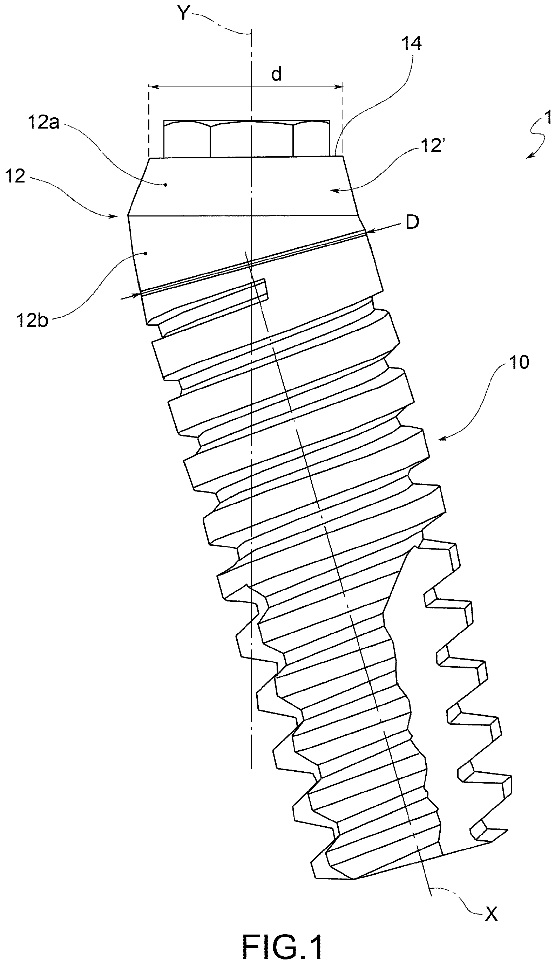

- Fig. 1 is an elevation view of the dental implant according to the invention, in one embodiment;

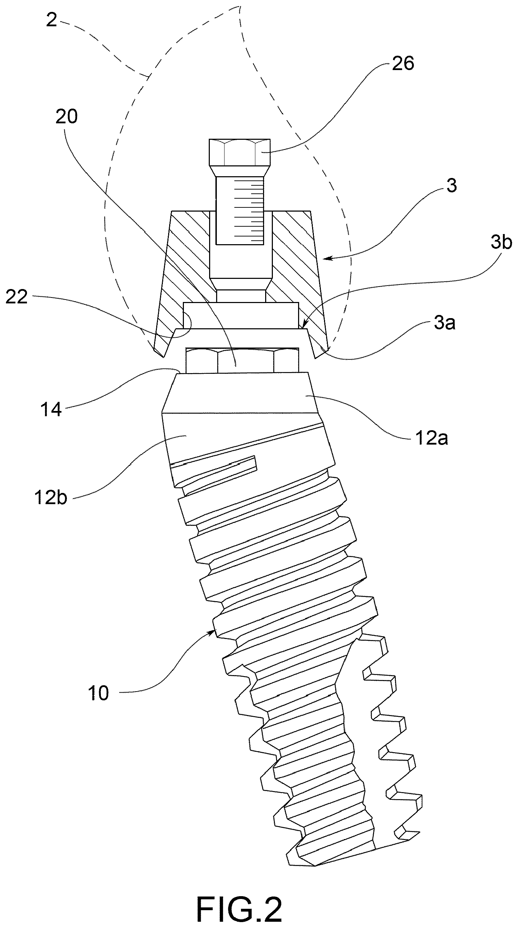

- Fig. 2 is a view in separate parts, and in partial section, of the dental implant of Fig. 1 and of an abutment, with relative abutment fixing screw; and

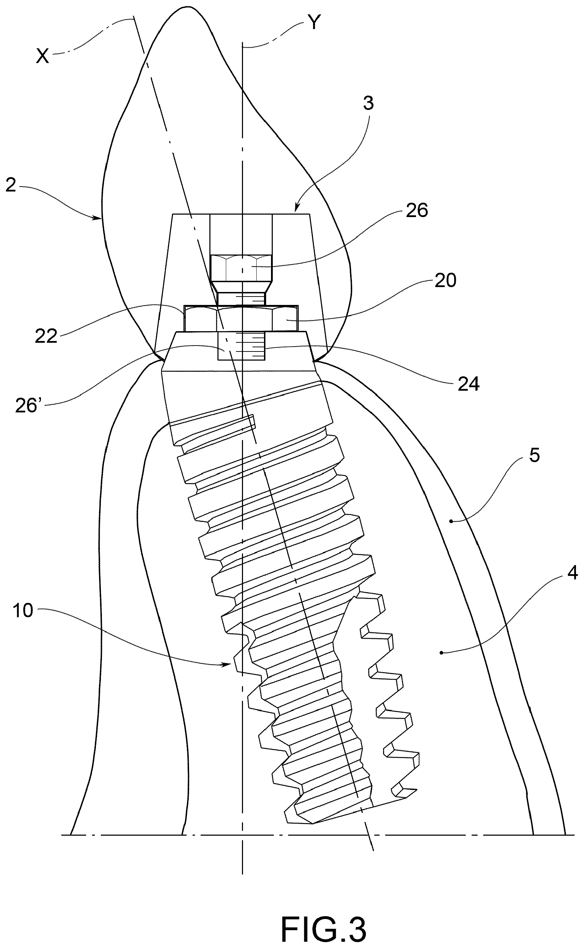

- Fig. 3 shows, in partial section, the implant inserted into the alveolar bone and coupled to a prosthetic crown.

### Detailed description of the invention

In the accompanying drawings, reference number 1 indicates, as a whole, an endosseous dental implant according to the invention.

In a general embodiment, the implant comprises an endosseous implant portion 10 and a transgingival portion 12.

The endosseous implant portion 10 extends along an implant axis X. This portion has an elongated shape and is suitable for anchoring the implant to the maxillary or mandibular alveolar bone 4.

The transgingival portion 12 extends from the implant portion 10. This transgingival portion 12 is suitable for crossing the gingiva 5 and forms, on the opposite side with respect to the implant portion 10, an implant-prosthesis connection platform 14.

In other words, the platform 14 constitutes the support plane for a abutment 3 of a dental prosthesis 2.

In one embodiment, the endosseous implant portion 10 and the transgingival portion 12 are integrally formed in a single piece.

The transgingival portion 12 is sized in such a way as to respect the so-called "biological width" (that is the amount determined by the soft tissues, epithelium and connective tissue), moving the critical area of the implant-prosthetic connection away from the bone crest so as to determine a "barrier of fibers" to protect the deeper spaces. In this way, it is possible to prevent peri-implantitis which is the main cause of implant failure due to inflammatory and infectious causes.

Therefore, the implant according to the present invention is of the type known by the term "tissue level" (that is with the implant-prosthetic connection at the soft tissue level), unlike the so-called "bone level" implants in which the implant-prosthetic connection is located at the level of the bone crest or below it.

The axis perpendicular to the platform 14 is defined as the prosthetic axis Y, in the implant according to the invention the implant axis X is inclined with respect to the prosthetic axis Y.

For example, the inclination between the prosthetic axis Y and the implant axis X is between 10° and 45°.

The implementation of the implant with the implant axis X inclined with respect to the prosthetic axis Y allows the natural anatomy of the tooth to be followed, allowing for prosthesization with a reduced number of implant components.

According to an aspect of the invention, the transgingival portion 12 forms a side wall 12' with a diameter which is equal to or less than the diameter of the endosseous implant portion 10 and progressively decreases at least in a distal portion 12a, or neck, ending with the implant-prosthesis connection platform 14.

In other words, the transgingival portion 12 is devoid of any edge or protrusion so as to give this portion a larger diameter than the diameter of the endosseous implant portion 10 at the junction with the transgingival portion 12.

In other words, with the possible exception of a curved connecting portion - described below - which may have a diameter at most equal to that of the endosseous implant portion 10 at the junction with the transgingival portion 12, the latter has convergent shape, that is tapered, towards the platform 14.

As a result of this convergence or tapering, the implant-prosthetic connection platform 14 has a smaller diameter than the (maximum) diameter of the endosseous implant portion 10. For example, the latter has a diameter D between 3 mm and 6 mm and the implant-prosthetic connection platform has a diameter d between 2.5 mm and 4 mm.

In one embodiment, the implant-prosthetic connection platform 14 is contained within the projection of the endosseous implant portion 10 along the implant axis X.

More in detail, in one embodiment, the transgingival portion 12 comprises a distal transgingival portion 12a, which defines the implant-prosthesis connection platform 14 and extends symmetrically about the prosthetic axis Y, and a connecting transgingival portion 12b, which connects the transgingival portion 12a to the endosseous implant portion 10.

In some embodiments, the side wall 12', that is the neck, of the distal transgingival portion 12a is a conical wall or a parabolic surface portion or a hyperbolic surface portion.

In the embodiment illustrated in the drawings, the connecting transgingival portion 12b is a curved portion with a substantially constant diameter.

For example, considering for simplicity the platform 14 extending in a horizontal plane, the transgingival connecting portion 12b allows for the connection between the distal transgingival portion 12a, which extends around the prosthetic axis Y, which in this example is a vertical axis, and the endosseous implant portion 10, which extends along the implant axis X, which in this example is inclined with respect to the vertical.

In one embodiment, an anti-rotation element 20 of male type extends from the implant-prosthetic connection platform 14 that is suitable for coupling geometrically with an anti-rotation portion 22 of female type of an abutment 3.

This anti-rotation element 20 is also integrally formed in a single piece with the transgingival portion 12 and with the endosseous implant portion 10.

For example, this anti-rotation element 20 of male type is a prismatic projection, for example with a hexagonal cross section.

In an embodiment variant, an anti-rotation portion of female type is formed in the transgingival portion 12 and is suitable for coupling geometrically with an anti-rotation element of male type of an abutment 3.

In one embodiment, a threaded hole 24 is obtained in the transgingival portion 12 that is suitable for receiving the threaded shank 26' of an abutment connection screw 26 which stably connects the abutment 3 to the implant 1.

In one embodiment, the threaded hole 24 affects only the distal transgingival portion 12a, that is it does not also extend into the transgingival connection portion 12b, neither into the endosseous implant portion 10.

The dental prosthesis 2 may in turn be cemented, screwed or otherwise made integral with the abutment 3.

It should be noted that the implant according to the invention allows for the use of an abutment connection screw 26 with a diameter equal to or greater than 1.5 mm, to the advantage of the stability of the anchorage between the prosthesis and the implant..

In one embodiment, the endosseous implant portion 10 is, or comprises, a threaded portion for screwing into the bone.

As mentioned above, the endosseous implant portion 10 is the portion of the implant that is responsible for determining the so-called "osseointegration", that is, the intimate contact between the bone and the implant surface that allows the ability of the implant to transfer functional prosthetics loads to the bone.

In one embodiment, the threaded portion has coils with a pitch equal to or less than 0.6 mm in order to allow for fine adjustments of the prosthetic axis without leading to excessive sinking of the implant into the alveolar bone.

In one embodiment, possible materials with which the implant is made are titanium or zirconium.

It is underlined that the transgingival portion with convergent geometry is one of the particular features of the proposed angled implant: the progressive reduction of the diameter in the apico-coronal direction determines a greater stability of the soft tissues (epithelium and connective tissue), helping to maintain a "barrier of fibers" in order to protect the deeper structures.

The convergence of the emergence profile also allows for the creation of a conometric component in the implant-prosthetic connection. In this case, it is possible to make an abutment 3 with a conical base 3a which extends inferiorly from the support surface 3b to the platform 14 and which is suitable for embracing the convergent neck 12a of the transgingival portion 12 of the implant with shape coupling and with friction so as to unload the occlusal forces onto a wider platform.

A double engagement is thus achieved between the abutment 3 and the implant 1: a first engagement given by the coupling between the anti-rotation portions 20, 22 and a second engagement given by the coupling between the conical surface 12' of the distal transgingival portion 12a (transmucosal neck) and the conical base 3a of the abutment 3.

It should be noted that the monolithic structure, that is in a single body without connections, of the implant formed by the endosseous implant portion and the transgingival portion has a series of surgical, mechanical and biological advantages. In particular:
- surgical times are reduced, by not having to assemble an angled abutment on the implant just inserted into the bone;
- the problems of unscrewing and disconnection between two distinct components are eliminated;
- the resultant of the prosthetic load is advantageously coaxial to the implant axis X, while in the embodiments wherein the transgingival portion is screwed to the endosseous implant portion, the resultant of the load is eccentric due to the need to make the through hole for the fixing screw;
- since there is no micro-movement between the two portions of the implant, inflammation of the peri-implant tissues is prevented;
- the absence of spaces between the two portions of the implant prevents bacterial contamination and the consequent peri-implantitis.

In order to meet contingent needs, a person skilled in the art may make changes, adaptations, and substitutions of elements with other functionally equivalent ones, to the embodiments of the dental implant according to the invention, without departing from the scope of the following claims. Each of the features described as belonging to a possible embodiment may be obtained independently of the other described embodiments.

## Claims

1. An implant for a dental prosthesis, comprising:
- an endosseous implant portion (10) extending along an implant axis (X);
- a transgingival portion (12) which extends from the endosseous implant portion (10), is suitable for crossing the gingiva and forms, on the opposite side with respect to the endosseous implant portion (10), an implant-prosthesis connection platform (14);
wherein:
- the implant-prosthesis connection platform (14) extends perpendicularly with respect to a prosthetic axis (Y), said prosthetic axis (Y) being inclined with respect to the implant axis (X);
- the transgingival portion (12) forms a side wall with a diameter which is less than or equal to the diameter of the endosseous implant portion (10) and progressively decreasing at least in a distal portion (12a) ending with the implant-prosthesis connection platform (14).

2. Implant according to claim 1, wherein the transgingival portion (12) comprises a distal transgingival portion (12a), which forms the implant-prosthesis connection platform (14) and extends symmetrically about the prosthetic axis (Y), and a connecting transgingival portion (12b) which connects the transgingival portion (12) to the endosseous implant portion (10).

3. Implant according to claim 2, wherein the side wall of the distal transgingival portion (12a) is a conical wall or a parabolic surface portion or a hyperbolic surface portion.

4. Implant according to claim 2 or 3, wherein the connecting transgingival portion (12b) is a curved portion with a substantially constant diameter.

5. Implant according to any one of the preceding claims, wherein a male anti-rotation element (20) extends from the implant-prosthesis connection platform, being suitable for being geometrically coupled with a female anti-rotation portion (22) of a prosthetic crown.

6. Implant according to any one of claims 1-4, wherein a female anti-rotation portion is obtained in the transgingival portion (12), being suitable for being geometrically coupled with a male anti-rotation element of a prosthetic crown.

7. Implant according to any one of the preceding claims, wherein a threaded hole (24) is obtained in the transgingival portion (12), being suitable for receiving the threaded shank of an abutment connection screw (26).

8. Implant according to any one of the preceding claims, wherein the endosseous implant portion (10) is or comprises a threaded portion for screwing into the gingival bone.

9. Implant according to any one of the preceding claims, wherein the endosseous implant portion (10) has a diameter comprised between about 3.5 mm and about 6 mm, and wherein the implant-prosthesis connection platform (14) has a diameter comprised between about 2.5 mm and 4 mm.

10. Implant according to any one of the preceding claims, further comprising an abutment (3) wherein a support plane to the implant-prosthesis connection platform (14) is formed and comprising a conical base (3a) which extends inferiorly from said support plane and which is suitable for embracing the side wall of the distal portion (12a) of the transgingival portion with a shape coupling and with friction.

11. Implant according to any of the preceding claims, wherein the endosseous implant portion (10) and the transgingival portion (12) are integrally formed in one piece.

12. Implant according to any of claims 7-11, wherein the threaded hole (24) extends only into the distal transgingival portion (12a).

13. Implant according to any of the preceding claims, wherein the implant-prosthetic connection platform (14) is contained within the projection of the endosseous implant portion along the implant axis (X).
